# FASCICULE DE BREVET EUROPEEN

(11) **EP 0 660 494 B1**
(45) Date de publication et mention de la délivrance du brevet: **18.03.1998**
(21) Numéro de dépôt: 94402973.5
(22) Date de dépôt: 21.12.1994
(51) Int. Cl.: H02K 21/24, H02K 21/00

(54) **Machine synchrone à aimants à variation de flux d'entrefer**
Dauermagnetsynchronmaschine die eine Änderung des magnetischen Flusses in dem Spalt ermöglicht
Synchronous permanent magnet electric machine with the possibility to change the magnetic flux in the gap

(30) Priorité: 21.12.1993 FR 9315353
(43) Date de publication de la demande: 28.06.1995
(73) Titulaire: GEC ALSTHOM TRANSPORT SA, 75116 Paris (FR)
(72) Inventeur: Masson, André, F-93600 Aulnay (FR)
(74) Mandataire: Gosse, Michel

(56) Documents cités:
- DE-A- 3 142 913
- DE-A- 3 302 822
- US-A- 3 525 005

## Description

La présente invention porte sur une machine synchrone à aimants à variation de flux d'entrefer.

Les machines synchrones à aimants à variation de flux d'entrefer ont comme avantages sur les machines à circuit d'excitation bobiné l'absence de pertes à l'inducteur qui est en général le rotor et leur légèreté liée à l'utilisation d'aimants performants.

Cependant, ces machines synchrones à aimants ont comme inconvénients majeurs que le champ des aimants est fixe et que le flux d'entrefer ne varie qu'avec le courant d'induit.

Il est connu de l'art antérieur que les machines à aimants en terres rares déposées sur le rotor prés de l'entrefer ont une faible variation du flux par le courant d'induit. Il en résulte que la tension dépend peu de la charge et est pratiquement proportionnelle à la vitesse.

Si la machine est associée à un convertisseur électronique, il doit être dimensionné pour la tension correspondant à la vitesse maximale. Ceci est un inconvénient par rapport à la machine asynchrone que l'on peut faire fonctionner à tension constante dans une certaine plage de vitesse.

Les documents DE-A-3 302 822, DE-A-3 142 913 et US-A-3 525 005 de l'état de la technique portent sur une machine synchrone conforme au préambule de la revendication 1 ci-dessous.

C'est le mérite de la demanderesse que de proposer une machine à aimants dont la variation du flux d'entrefer peut être commandée librement dans une certaine plage de vitesse.

Cette plage de vitesse correspond à la vitesse minimale pour le flux maximal et à la vitesse maximale pour le flux minimal.

La machine à aimants selon l'invention est susceptible d'être associée à un convertisseur électronique de dimensionnement en tension plus faible que si le flux était constant.

Le flux d'entrefer de la machine à aimants selon l'invention résulte du champ des aimants et de la réluctance (rapport entre la valeur et la surface de l'entrefer) du circuit de flux. En ne modifiant rien aux aimants, une solution conforme à l'invention pour faire varier le flux est de faire varier une partie importante de la réluctance d'entrefer via la géométrie de l'entrefer.

Aussi un objet de l'invention est-il une machine synchrone à aimants comportant au moins un stator solidaire d'une carcasse, un rotor solidaire d'un arbre et des moyens de modification de la position relative entre l'un au moins des stators et ledit rotor de manière à modifier la valeur de l'entrefer plan entre stator et rotor par modification de l'écart entre ledit stator et ledit rotor de manière à modifier la valeur du flux circulant entre ledit stator et ledit rotor, le plan dudit entrefer plan étant perpendiculaire à l'axe longitudinal dudit arbre, caractérisée en ce que ledit rotor est fixe et en ce que lesdits stators sont susceptibles de se déplacer axialement.

Conformément à l'invention, la machine à aimants à variation de flux d'entrefer comporte l'une des caractéristiques suivantes:
- lesdits stators sont disposés de part et d'autre dudit rotor fixe,
- les moyens de modification de la position relative entre chaque stator et ledit rotor sont un ou plusieurs vérins hydrauliques ou à vis.

Un avantage de la machine à aimants selon l'invention est que :
- elle nécessite une électronique de commande moins coûteuse et moins volumineuse du fait que la tension est moins élevée,
- elle a un fonctionnement identique à la machine synchrone ou asynchrone, et
- elle est plus petite, plus légère et comporte un meilleur rendement que la machine synchrone ou asynchrone à excitation bobinée.

D'autres buts, caractéristiques et avantages de l'invention apparaîtront à la lecture de la description des modes de réalisation préférés de la machine à aimants selon l'invention, description faite en liaison avec les dessins dans lesquels :
- les figures 1 et 2 sont des représentations schématiques en coupe longitudinale de la machine à aimants à entrefer plan selon un premier mode de réalisation préféré de l'invention;
- la figure 3 est une représentation schématique en coupe longitudinale de la machine à aimants à entrefer cylindrique selon un deuxième mode de réalisation préféré de l'invention;
- la figure 4 est une représentation schématique en coupe longitudinale de la machine à aimants selon un troisième mode de réalisation préféré de l'invention;
- la figure 5 est une représentation schématique en coupe longitudinale de la machine à aimants selon un quatrième mode de réalisation préféré de l'invention.

Conformément à l'état de la technique, la machine à aimants se compose, de manière générale, d'un stator 1, 2 solidaire d'une carcasse 5 et d'un rotor 3, solidaire d'un arbre 6.

Le stator se décompose en une couronne de culasse 1 de stator et en une couronne d'encoches 2 sur laquelle sont maintenus les bobinages d'induit.

Le rotor se décompose en une couronne d'aimants de rotor 3 constituant l'inducteur et en une couronne de culasse de rotor 4. L'ensemble est susceptible d'être maintenu par une frette 7.

Les structures, fonctions et mises en oeuvre de ces éléments sont connues et décrites dans l'état de la technique.

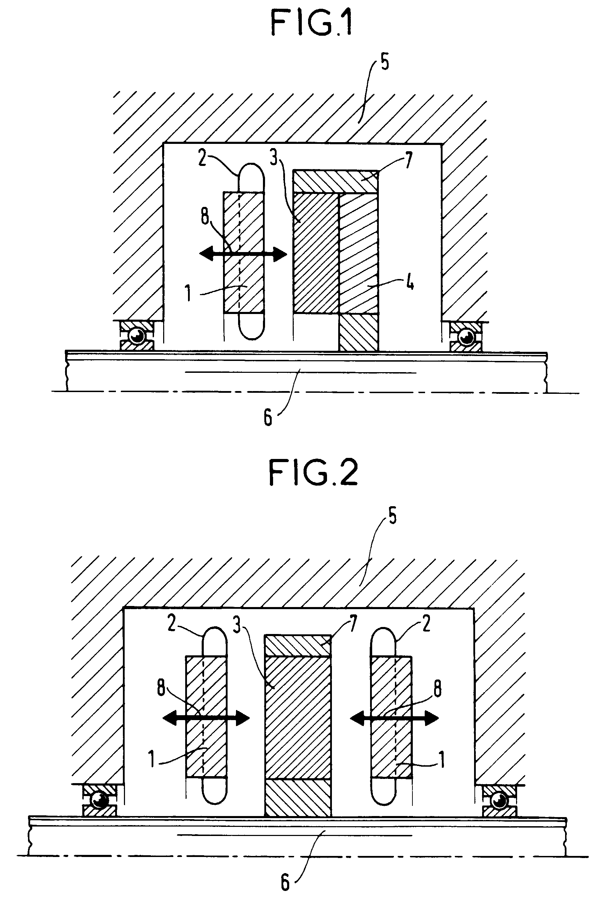

Les figures 1 et 2 sont une représentation schématique en coupe longitudinale de la machine à aimants à entrefer plan selon un premier mode de réalisation préféré de l'invention.

La figure 1 se distingue de la figure 2 en ce que le rotor ne comporte pas de couronne de culasse de rotor 4 mais deux stators 1, 2 solidaires de la carcasse 5 et disposés de part et d'autre du rotor à aimants 3, 7 solidaire de l'arbre 6.

Conformément à la caractéristique essentielle de la machine à aimants de l'invention, la valeur du flux est obtenue en faisant varier la valeur de l'entrefer plan en modifiant la valeur de l'écart entre l'inducteur et l'induit.

Il résulte d'une augmentation de l'entrefer une diminution du flux.

Des moyens 8 sont prévus pour modifier l'écartement entre l'inducteur et l'induit.

Ces moyens 8 peuvent être un ou plusieurs vérins, par exemple hydrauliques ou à vis, et sont schématisés par la flèche 8.

Ces moyens doivent vaincre la force d'attraction axiale entre stator et rotor.

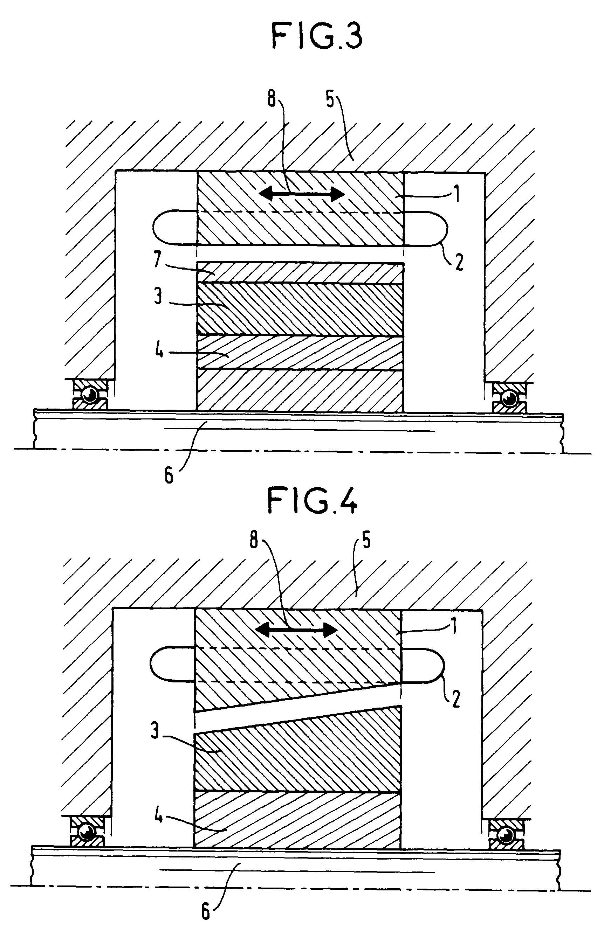

La figure 3 est une représentation schématique en coupe longitudinale de la machine à aimants à entrefer cylindrique selon un deuxième mode de réalisation préféré de l'invention.

Conformément à ce deuxième mode de réalisation préféré, le stator 1, 2 et le rotor 3, 7 sont disposés axialement le long de l'arbre de la machine à aimants.

Le déplacement entre le stator et le rotor, et donc entre l'inducteur et l'induit, est effectué dans le sens axial de la machine à aimants.

Dans ce sens, la valeur de l'entrefer est constante.

Si la surface d'entrefer varie, le flux varie également et la tension appliquée, dans le cas d'un moteur, peut être à peu près constante alors que la vitesse varie.

Conformément à la caractéristique essentielle de la machine à aimants de l'invention selon le deuxième mode de réalisation préféré, la valeur du flux est obtenue en faisant varier la valeur de la surface d'entrefer cylindrique en modifiant la position longitudinale relative entre l'inducteur et l'induit.

Des moyens 8 sont prévus pour modifier la position longitudinale relative entre l'inducteur et l'induit.

Ces moyens 8 peuvent être un ou plusieurs vérins, par exemple hydrauliques ou à vis, et sont schématisés par les flèches 8.

Il est avantageux d'éviter, dans ce deuxième mode de réalisation préféré, l'apparition d'un champ tournant dans les têtes de bobines (non représentées) de manière à éviter un échauffement des bobines.

Pour ce faire, une solution consiste à disposer une couronne feuilletée à l'extérieur des têtes de bobines de manière à canaliser le flux sans perte, sans création de courants de Foucault et donc sans échauffement.

La figure 4 est une représentation schématique en coupe longitudinale de la machine à aimants selon un troisième mode de réalisation préféré de l'invention.

Conformément à ce troisième mode de réalisation préféré, le stator 1, 2 et le rotor 3 sont disposés axialement le long de l'arbre de la machine à aimants.

Le stator et le rotor ont une forme générale conique de manière à définir un entrefer de forme générale conique.

Conformément à la caractéristique essentielle de la machine à aimants de l'invention selon le troisième mode de réalisation préféré, la valeur du flux est obtenue en faisant varier la hauteur de l'entrefer conique ainsi que la surface d'entrefer en modifiant la position longitudinale relative entre l'inducteur et l'induit.

Le déplacement entre le stator et le rotor, et donc entre l'inducteur et l'induit, est effectué dans le sens axial de la machine à aimants.

Des moyens 8 sont prévus pour modifier la position longitudinale relative entre l'inducteur et l'induit.

Ces moyens 8 peuvent être un ou plusieurs vérins, par exemple hydrauliques ou à vis, et sont schématisés par la flèche 8.

Comme indiqué précédemment, il est avantageux d'éviter, dans ce troisième mode de réalisation préféré, l'apparition d'un champ tournant dans les têtes de bobines (non représentées) de manière à éviter un échauffement des bobines.

Un avantage de ce troisième mode de réalisation préféré de l'invention est un déplacement moindre du stator ou du rotor par rapport au autres modes de réalisation préférés de l'invention.

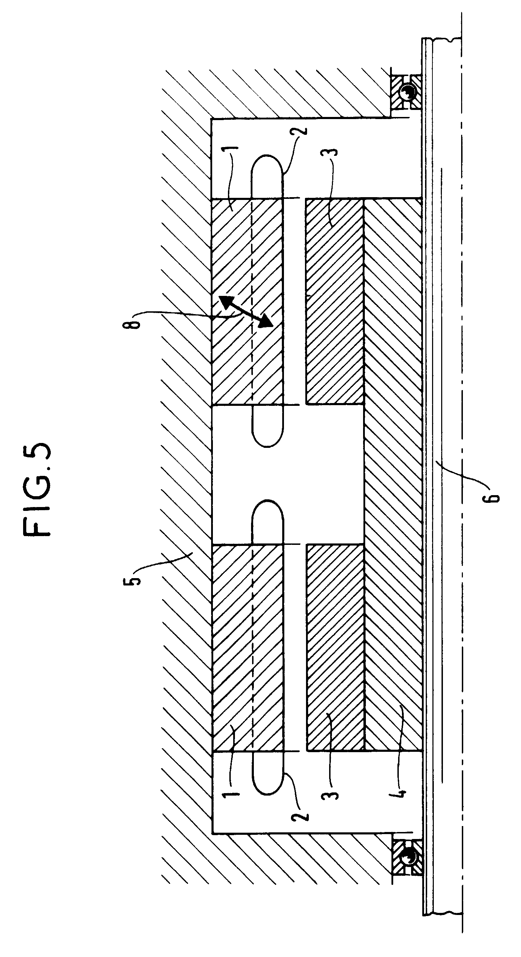

La figure 5 est une représentation schématique en coupe longitudinale de la machine à aimants selon un quatrième mode de réalisation préféré de l'invention.

Conformément à ce quatrième mode de réalisation préféré, deux stators 1, 2 et un rotor 3, 4 sont disposés axialement le long de l'arbre de la machine à aimants.

Les deux stators sont disposés coaxialement.

Dans ce quatrième mode de réalisation préféré, les stators et le rotor peuvent être de forme générale cylindrique ou conique de manière à définir un entrefer de forme générale, respectivement, cylindrique ou conique.

Conformément à la caractéristique essentielle de la machine à aimants selon le quatrième mode de réalisation préféré de l'invention, la valeur de la tension est obtenue en faisant varier la position angulaire relative entre les stators par pivotement autour de l'arbre de l'un au moins des stators.

Ce pivotement a pour effet l'introduction d'un déphasage entre les tensions des stators.

Les deux stators sont de préférence connectés en série.

Il ne s'agit pas dans ce mode de réalisation préféré de faire varier la réluctance et donc de faire varier le flux, mais de faire varier la tension au moyen de variation de phase.

Des moyens 8 sont prévus pour modifier la position angulaire relative entre induits pendant que l'inducteur tourne.

Ces moyens 8 peuvent être un ou plusieurs vérins, par exemple hydraulique ou à vis, et sont schématisés par les flèches 8.

Comme indiqué précédemment, on évitera dans ce troisième mode de réalisation préféré l'apparition d'un champ tournant dans les têtes de bobines (non représentées) de manière à éviter un échauffement des bobines.

## Revendications

1. Machine synchrone à aimants comportant au moins un stator (1, 2) solidaire d'une carcasse (5), un rotor (3, 4) solidaire d'un arbre (6) et des moyens de modification (8) de la position relative entre l'un au moins des stators (1, 2) et ledit rotor (3, 4) de manière à modifier la valeur de l'entrefer plan entre stator et rotor par modification de l'écart entre ledit stator et ledit rotor de manière à modifier la valeur du flux circulant entre ledit stator et ledit rotor, le plan dudit entrefer plan étant perpendiculaire à l'axe longitudinal dudit arbre (6), caractérisée en ce que ledit rotor (3, 4) est fixe et en ce que lesdits stators (1, 2) sont susceptibles de se déplacer axialement.

2. Machine selon la revendication 1, dans laquelle lesdits stators (1, 2) sont disposés de part et d'autre dudit rotor (3, 4) fixe.

3. Machine selon l'une quelconque des revendications 1 ou 2, dans laquelle les moyens de modification (8) de la position relative entre chaque stator (1, 2) et ledit rotor (3, 4) sont un ou plusieurs vérins hydrauliques ou à vis.

## Patentansprüche

1. Magnetsynchronmaschine mit wenigstens einem mit einer Karkasse (5) fest verbundenen Stator (1, 2), einem mit einer Welle (6) fest verbundenen Rotor (3, 4) und Mitteln (8) zum Verändern der Relativposition zwischen wenigstens einem der Statoren (1, 2) und dem Rotor (3, 4), um den Wert des ebenen Luftspalts zwischen Stator und Rotor durch Verändern des Abstands zwischen dem Stator und dem Rotor zu verändern und so den Wert des zwischen dem Stator und dem Rotor zirkulierenden Flusses zu verändern, wobei die Ebene des ebenen Spalts senkrecht zur Längsachse der Welle (6) ist, dadurch gekennzeichnet, daß der Rotor (3, 4) fest ist und daß die Statoren (1, 2) in der Lage sind, sich axial zu bewegen.

2. Maschine nach Anspruch 1, bei der die Statoren (1, 2) auf beiden Seiten des festen Rotors (3, 4) angeordnet sind.

3. Maschine nach einem der Ansprüche 1 oder 2, bei der die Mittel zum Verändern (8) der Relativposition zwischen jedem Stator (1, 2) und dem Rotor (3, 4) ein oder mehrere Hydraulikzylinder oder Schraubwinden sind.

## Claims

1. A synchronous magnet machine comprising at least one stator (1, 2) secured to a casing (5), a rotor (3, 4) secured to a shaft (6), and means (8) for modifying the position of at least one of the stators (1, 2) relative to said rotor (3, 4) so as to modify the size of the plane airgap between the stator and the rotor by modifying the distance between said stator and said rotor so as to modify the value of the flux flowing between said stator and said rotor, the plane of said plane airgap being perpendicular to the longitudinal axis of said shaft (6), said machine being characterized in that said rotor (3, 4) is axially fixed, and in that said stators (1, 2) can be displaced axially.

2. A machine according to claim 1, in which said stators (1, 2) are disposed on either side of said axially fixed rotor (3, 4).

3. A machine according to claim 1 or 2, in which the means (8) for modifying the position of each stator (1, 2) relative to said rotor (3, 4) are constituted by one or more hydraulic or screw actuators.
